# EUROPÄISCHE PATENTSCHRIFT

(11) **EP 2 119 750 B1**
(45) Veröffentlichungstag und Bekanntmachung des Hinweises auf die Patenterteilung: **28.09.2016**
(21) Anmeldenummer: 09005676.3
(22) Anmeldetag: 22.04.2009
(51) Int. Cl.: C09J 7/02, G09F 3/00, G09F 3/10

(54) **Mehrschichtige Folienanordnung sowie deren Verwendung**
Multi-layer film assembly and use thereof
Assemblage de film multicouche et son utilisation

(30) Priorität: 16.05.2008 DE 102008024023
(43) Veröffentlichungstag der Anmeldung: 18.11.2009
(73) Patentinhaber: Tesa Scribos Gmbh, 69126 Heidelberg (DE)
(72) Erfinder: Kresse, Tobias, Dr., 76135 Karlsruhe (DE); Jürgens, Christoph, 22395 Hamburg (DE); Hummel, Kirstin, 79761 Waldshut-Tiengen (DE); Dollase, Thilo, Dr., 22397 Hamburg (DE)

(56) Entgegenhaltungen:
- EP-A- 1 972 674
- WO-A-2007/028700
- WO-A1-2009/046836
- DE-A1-102005 021 301
- TOBIAS KRESSE ET AL: 'LOCAL ADJUSTMENT OF THE OPTICAL PROPERTIES OF METAL ISLAND FILMS BY MEANS OF A LASER' PROCEEDINGS OF SPIE Bd. 5955, 16 September 2005, Seiten 595512-1 - 595512-6, XP055091370 DOI: 10.1117/12.621887 ISSN: 0277-786X

## Beschreibung

Die vorliegende Erfindung betrifft eine mehrschichtige Folienanordnung gemäß dem Oberbegriff von Anspruch 1, die Verwendung einer mehrschichtigen Folienanordnung sowie ein Verfahren zur Verbindung einer mehrschichtigen Folienanordnung mit einem Klebeuntergrund.

Aus dem Stand der Technik sind verschiedene Folienanordnungen bekannt, die als Sicherheitsetiketten eingesetzt werden, um Produkte oder Produktverpackungen vor Manipulation, Fälschung oder dergleichen zu schützen. Derartige Sicherheitsetiketten werden üblicherweise sowohl in Form von Bändern, insbesondere Klebebändern, als auch in Form von Stanzlingen mit begrenzten Abmessungen eingesetzt.

Aus WO 2009/046 836 A1 ist ein Aufkleber zum Aufkleben auf ein Objekt mit einer Speicherschichtanordnung und mit einer darunter angeordneten Klebschicht bekannt, mittels der der Aufkleber auf ein Objekt aufgeklebt werden kann. Die Speicherschichtanordnung kann eine Metallschicht umfassen, und in die Speicherschichtanordnung kann Information als optische Struktur eingebracht werden.

WO 2007/028 700 A1 beschreibt ein Selbstklebeband mit einer Trägerschicht und einer Haftschicht, wobei zur Kenntlichmachung einer unberechtigten Öffnung einer mit dem Selbstklebeband verschlossenen Verpackung eine Primerschicht abschnittsweise auf die Trägerschicht aufgebracht ist und eine Trennschicht vollflächig zwischen Haftschicht und Primerschicht bzw. Trägerschicht angeordnet ist.

DE 101 56 793 A1 offenbart ein Sicherheitsetikett in Form eines Sicherheitsklebebandes basierend auf einer mehrschichtigen Folienanordnung. Dieses Sicherheitsklebeband weist eine thermisch veränderbare Folie sowie eine Absorberschicht auf. Ferner ist optional zwischen der Folie und der Absorberschicht eine Metallschicht vorgesehen. Durch Bestrahlung des Sicherheitsklebebandes mit einem Laser ist basierend auf der thermischen Veränderung durch die Laserbestrahlung eine Individualisierung, also eine individuelle Beschriftung, des Klebebandes möglich. Unterhalb der Absorberschicht ist eine Klebeschicht vorgesehen, mittels der das Sicherheitsklebeband auf dem zu sichernden Gegenstand verklebt werden kann. Beim Ablösen des Sicherheitsklebebandes von dem so gesicherten Gegenstand bleibt die mehrschichtige Folienanordnung weitgehend unbeschädigt, die Trennung von dem Gegenstand erfolgt lediglich durch eine Auftrennung der Klebeschicht. Somit ist dieses Sicherheitsklebeband unter Verwendung neuer Klebemittel unter Umständen ein weiteres Mal verwendbar.

Demgegenüber offenbart EP 1 208 016 B1 eine Übertragungsfolie, mittels der ein strukturierter, metallisierter Lack von einem Folienträger auf den zu kennzeichnenden Gegenstand übertragen wird. Zur Übertragung des strukturierten, metallisierten Lacks wird die Folie in Kontakt mit dem zu kennzeichnenden Gegenstand gebracht, so dass eine Verbindung zwischen Lack und Gegenstand stattfindet. Nach dem Aufbringen des Lacks erfolgt dann eine gezielte Trennung zwischen Lack und Folie, so dass nur der Lack auf dem Gegenstand verbleibt. Durch die Trennung des Lacks von der Folie werden ein beschädigungsfreies Ablösen und eine weitere Verwendung verhindert.

Auf einem ähnlichen Prinzip basiert auch die den Ausgangspunkt der vorliegenden Erfindung bildende mehrschichtige Folienanordnung gemäß GB 2 211 760 A. Diese mehrschichtige Folienanordnung weist einen Träger, eine Markierschicht sowie eine adhäsionssteuernde Funktionsschicht auf. Die Markierschicht dient dazu, ein klassisches Prägehologramm auf einen zu kennzeichnenden Gegenstand aufzubringen. Hierzu wird zunächst ein Prägehologramm mittels eines entsprechenden Stempelwerkzeugs in Form einer beugenden Struktur in die Markierschicht eingebracht. Aufgrund des speziellen Stempels und seiner Verwendung zur Reproduktion der Prägevorlage ist eine individualisierte Kennung nicht vorgesehen. Die Markierschicht wird nach der Prägung auf den zu kennzeichnenden Gegenstand übertragen. Für die Übertragung der Markierschicht ist die adhäsionssteuernde Funktionsschicht zwischen Träger und Markierschicht vorgesehen. Diese reduziert die Adhäsion zwischen Träger und Markierschicht, so dass der Träger nach dem Aufbringen der Markierschicht auf den zu kennzeichnenden Gegenstand problemlos entfernt werden kann.

Der vorliegenden Erfindung liegt damit das Problem zugrunde, eine mehrschichtige Folienanordnung zu schaffen, die insbesondere im Hinblick auf sicherheitstechnische Anwendungen optimiert ist.

Die vorliegende Aufgabe wird bei einer mehrschichtigen Folienanordnung gemäß dem Oberbegriff von Anspruch 1 durch die Merkmale des kennzeichnenden Teils von Anspruch 1 gelöst. Eine nebengeordnete Lösung stellt eine Verwendung gemäß Anspruch 12 dar. Weitere Aspekte der Erfindung liegen in einem Verfahren zur Verbindung einer mehrschichtigen Folienanordnung mit einem Klebeuntergrund gemäß Anspruch 17. Vorteilhafte Ausgestaltungen und Weiterbildungen sind Gegenstand der jeweiligen Unteransprüche.

Von besonderer Bedeutung für die vorliegende Erfindung ist zunächst die Erkenntnis, dass eine Trennung von Träger und Markierschicht nicht in jedem Fall möglich ist, ohne die eigentliche Funktion der mehrschichtigen Folienanordnung zu zerstören. Damit sind die bekannten Folienanordnungen nicht in jedem Fall einsetzbar, da diese eine Trennung von Markierschicht und Träger erfordern. Um jedoch auch für den Fall, dass eine Trennung zwischen Markierschicht und Träger nicht erfolgt, eine Wiederverwendung der mehrschichtigen Folienanordnung auszuschließen, wurde erkannt, dass es ausreichend ist, eine adhäsionssteuernde Funktionsschicht unterhalb der Markierschicht anzuordnen. Durch diese adhäsionssteuernde Funktionsschicht kann die Haftung der einzelnen Schichten zueinander in gewünschter Weise beeinflusst werden. Je nach Ausgestaltung kann somit der Träger nach dem Aufbringen der Folienanordnung auf einen Gegenstand zunächst dort verbleiben. Die adhäsionssteuernde Funktionsschicht führt dann bei einem Ablöseversuch zu dem gewünschten Bruch innerhalb der Folienanordnung, beispielsweise dem Ablösen des Trägers, wodurch dann jedoch eine weitere Verwendung der Folienanordnung ausgeschlossen wird.

Überraschend wurde festgestellt, dass die adhäsionssteuernde Funktionsschicht nicht nur eingesetzt werden kann, um die Adhäsion unmittelbar angrenzender Schichten zu beeinflussen sondern auch zur Steuerung der Adhäsion weiterer Schichten. Insbesondere kann mittels der adhäsionssteuernden Funktionsschicht die Adhäsion zwischen dem Träger und der Markierschicht verringert werden, so dass die Adhäsion zwischen Markierschicht und Träger die Schwachstelle der Folienanordnung ist und bei einem Ablöseversuch dort die Trennung erzielt wird. Dennoch ist die Adhäsion zwischen Markierschicht und Träger jedoch groß genug, dass der Träger zunächst auf der Markierschicht verbleiben kann und nicht versehentlich abgelöst wird. Die Trennung zwischen Markierschicht und Träger erfolgt vielmehr erst dann, wenn dies tatsächlich beabsichtigt ist, also wenn der Träger gezielt beansprucht wird, beispielsweise durch ein Ziehen am Träger.

In bevorzugter Ausgestaltung ist die adhäsionssteuernde Funktionsschicht unmittelbar unterhalb der Markierschicht angeordnet, wirkt sich somit unmittelbar und nicht nur über weitere Zwischenschichten auf die Adhäsion der Markierschicht aus. Eine derartige Anordnung ist insbesondere im Hinblick auf eine möglichst einfache Anpassung und Abstimmung der jeweiligen Adhäsionskräfte zwischen den verschiedenen Schichten besonders vorteilhaft.

In weiter bevorzugter Ausgestaltung ist die Markierschicht mikroskopisch gesehen als nicht vollflächig geschlossene Schicht ausgebildet. Unter einer mikroskopischen Betrachtung ist vorliegend eine Betrachtung der Feinstruktur in der Größenordnung einiger nm zu verstehen. Die über und/oder unter der Markierschicht angeordnete Schicht ist also nicht vollflächig mit der Markierschicht bedeckt. Vielmehr sind zwischen Inseln der Markierschicht Zwischenräume, in die Material der darüber und/oder der darunter angeordneten Schicht eindringen kann, beispielsweise der Lack während des Auftrags einer Lackschicht. Die Markierschicht ist nach Art des Vollmer-Weber-Wachstums (reines Inselwachstum) aufgebaut (H. Lüth, Solid Surfaces, Interfaces and Thin Films, Springer Verlag, 2001; T. Kresse, M. Sattler, and S. Noehte, "Local adjustment of the optical properties of metal island films by means of a laser", Proceedings of SPIE - The International Society for Optical Engineering 5955, pp. 1-6 (2005)). Eine Markierschicht nach Art des Vollmer-Weber-Wachstums, die mikroskopisch also weder zu der darüber liegenden Schicht noch zu der darunter liegenden Schicht eine geschlossene Fläche bildet, ist besonders bevorzugt, da hier der größte Effekt über einen unmittelbaren Auftrag der adhäsionssteuernden Funktionsschicht auf die Markierschicht erzielt werden kann.

Eine solche Schicht, wenn auch mikroskopisch inhomogen, erscheint typischerweise makroskopisch beispielsweise für das menschliche Auge optisch einheitlich.

Wie zuvor beschrieben bedeckt die Markierschicht in bevorzugter Ausgestaltung die darüber und/oder darunter angeordnete Schicht, insbesondere aber einen unmittelbar darüber angeordneten Träger, mikroskopisch gesehen nicht vollständig. Es hat sich gezeigt, dass eine besonders gute Steuerung der Adhäsion der einzelnen Schichten der Folienanordnung erzielt werden kann, wenn die Markierschicht die darüber und/oder darunter angeordnete Schicht mikroskopisch betrachtet zu mehr als 80%, vorzugsweise zu mehr als 90%, weiter vorzugsweise zu mehr als 95% bedeckt.

Besonders vorteilhaft ist ferner eine Ausgestaltung, in der die adhäsionssteuernde Funktionsschicht in flüssiger Form auf die Markierschicht aufgebracht und anschließend ausgehärtet wird. Die adhäsionssteuernde Funktionsschicht kann in diesem Fall in die mikroskopischen Zwischenräume innerhalb der Markierschicht eindringen. Als besonders vorteilhaft einsetzbar hat sich eine beispielsweise durch UV-Vernetzung oder thermische Vernetzung vernetzbare Funktionsschicht herausgestellt. Insbesondere eignen sich UVvernetzbare Lacke als adhäsionssteuernde Funktionsschicht. Andere, insbesondere chemisch vernetzbare Lacke sind ebenfalls denkbar wie auch heißlaminierfähige Systeme.

Die Markierschicht ist vorzugsweise als laserbeschriftbare Schicht ausgebildet, d.h. durch Lasereinwirkung kann eine Beschriftung - Kennzeichnung - der Markierschicht erfolgen. Eine derartige Kennzeichnung bietet den Vorteil, dass sie individuell angepasst werden kann, wodurch Fälschungen erschwert sind. Wenn die Kennzeichnung zudem weitere Sicherheitsmerkmale aufweist, können Fälschungen und Manipulationen wirksam unterbunden werden. Ein solches zusätzliches Sicherheitsmerkmal stellt insbesondere eine Kennzeichnung mit einem individualisierten computergenerierten Hologramm dar. Derartige computergenerierte Hologramme sind beispielsweise aus der DE 100 39 370 A1 oder der DE 101 28 902 A1 bekannt. Alternativ kann die Markierschicht auch für andere Arten von Markierungen ausgebildet sein, beispielsweise zur Markierung durch Prägen. Die Markierschicht kann dann beispielsweise Markierungen in Form von Prägungen, Prägehologrammen oder dergleichen aufweisen. Hierfür eignet sich insbesondere eine metallische oder metallisierte Markierschicht.

In einer weiter bevorzugten Ausgestaltung der mehrschichtigen Folienanordnung ist die Markierschicht unmittelbar unterhalb des Trägers angeordnet. Diese Anordnung ist besonders dann vorteilhaft, wenn der Träger nicht ausschließlich eine Tragfunktion wahrnimmt, sondern zudem auch gemeinsam mit der Markierschicht eine Kennzeichnung trägt. Eine solche Kennzeichnung sowohl der Markierschicht als auch des Trägers kann beispielsweise durch eine thermische Wechselwirkung zwischen der Markierschicht und dem Träger erzielt werden. Aufgrund dieser Wechselwirkung erfolgt dabei eine Strukturveränderung, die somit die Kennzeichnung ausbildet.

Es hat sich gezeigt, dass als Markierschicht insbesondere Metallschichten vorteilhaft sind, da diese bei geeigneter Wahl des Metalls einerseits und der Schichtdicke andererseits sowohl einen hohen Absorptionsgrad für sichtbare Laserstrahlung (λ = 400 - 800 nm) als auch einen hohen Reflektionskoeffizienten aufweisen. Insbesondere geeignet für Laserbeschriftungsverfahren ist eine Aluminiumschicht.

Die Markierschicht weist vorzugsweise eine Schichtdicke von mindestens 2 nm, vorzugsweise von mindestens 4 nm, und/oder von höchstens 20 nm, vorzugsweise von höchstens 10 nm, auf. Der Begriff "Schichtdicke" charakterisiert vorliegend die makroskopische Dicke der Schicht, lässt also ggf. auftretendes Inselwachstum der Markierschicht unberücksichtigt. Eine derartige Schichtdicke ist insbesondere im Hinblick auf eine Laserbeschriftung, beispielsweise mit einem computergenerierten Hologramm, vorteilhaft, da sie einerseits eine ausreichende Schreibqualität und -geschwindigkeit ermöglicht sowie andererseits auch eine gute Auslesbarkeit sowohl in Reflektion als auch in Transmission. Die optische Dichte OD für sichtbares Licht liegt dabei bevorzugt im Bereich von etwa 1, 5 bis etwa 2,5, je nach Material und Schichtqualität. Die Anwendung ist somit nicht durch einen speziellen Leseprozess beschränkt. Die geringe Schichtdicke bietet zudem den Vorteil, dass ein beschädigungsfreies Ablösen der Markierschicht ohne Träger nahezu ausgeschlossen ist. Eine Weiterverwendung ist damit wirksam unterbunden.

In einer nicht erfindungsgemäßen Ausgestaltung beträgt die Schichtdicke der Markierschicht vorzugsweise etwa 10 µm bis etwa 200 µm, insbesondere etwa 50 µm bis etwa 100 µm. Eine solche Schichtdicke ist besonders für eine Kennzeichnung der Markierschicht mittels eines Prägehologramms besonders vorteilhaft. Die optische Dichte OD für sichtbares Licht liegt hier bevorzugt im Bereich von etwa 3,5 bis etwa 4,5 je nach Material und Schichtqualität.

Die adhäsionssteuernde Funktionsschicht ist als Lackschicht ausgebildet. Lacke eignen sich insbesondere aufgrund ihrer guten Adhäsionseigenschaften. Zudem kann eine Lackschicht auch ohne weiteres in einer Dicke aufgetragen werden, die gering genug ist, um nicht zu stark aufzutragen, aber dennoch ausreicht, um die Adhäsion in gewünschtem Maße zu beeinflussen. Besonders geeignet sind Lackzusammensetzungen, die einpolymerisierbare Rohstoffe enthalten. Zudem sind Säure enthaltende Lackzusammensetzungen besonders vorteilhaft, insbesondere in Kombination mit einer metallischen Markierschicht. Die Schichtdicke der adhäsionssteuernden Funktionsschicht (makroskopisch) sollte insbesondere mindestens 1 µm, vorzugsweise mindestens 5 µm, und/oder höchstens 100 µm, vorzugsweise höchstens 50 µm betragen. Auch hier ist eine geringe Schichtdicke wieder von Vorteil, um eine hohe Brüchigkeit zu erzielen und so ein beschädigungsfreies Ablösen nach der Anwendung zu verhindern. Der Begriff makroskopisch definiert hier die Größenordnung des Mehrlagenschichtaufbaus, nämlich die Größenordnung bis zu einigen hundert µm.

In weiter bevorzugter Ausgestaltung ist die adhäsionssteuernde Funktionsschicht vollflächig aufgebracht. Der Begriff "vollflächig" betrifft vorliegend die makroskopische Sichtweise, ein ggf. auftretendes mikroskopisches Inselwachstum der Markierschicht bleibt diesbezüglich also unberücksichtigt. Die vollflächige Aufbringung der adhäsionssteuernden Funktionsschicht hat den Vorteil, dass die Markierschicht nach einer Trennung von dem Träger ebenfalls vollflächig auf dem gekennzeichneten Gegenstand verbleibt. Eine Kennzeichnung ist dann ggf. auch nach dem Entfernen des Trägers aus der Markierschicht auslesbar. Eine Weiterverwendung der Markierung ist dennoch ausgeschlossen, da diese aufgrund der adhäsionssteuernden Funktionsschicht, insbesondere eines leicht brüchigen Lacks, nicht zerstörungsfrei von dem Gegenstand entfernt werden kann.

In einer alternativen Ausgestaltung ist die adhäsionssteuernde Funktionsschicht makroskopisch betrachtet nur partiell aufgebracht. Dadurch bleibt bei einem Ablösen des Trägers die Markierschicht auch nur partiell auf dem Gegenstand, so dass hier bereits eine Zerstörung der Kennung erfolgt. Der partielle Auftrag selbst kann aber in Form einer weiteren Kennung erfolgt sein, so dass diese zusätzliche Kennung sichtbar wird. Eine derartige Kennung kann beispielsweise ein Muster, ein Logo oder ein Schriftzug wie "GEÖFFNET" sein.

Als Träger wird eine Polyesterfolie als Polymerfolie eingesetzt. Eine biaxiale Verstreckung der Polymerfolie ist besonders vorteilhaft, um im Falle einer Kennzeichnung Mittels eines Lasers diese nicht nur in die Markierschicht sondern auch in die Polymerfolie einzuschreiben.

Weiter bevorzugt weist der Träger eine Schichtdicke (makroskopisch) von mindestens 10 µm, vorzugsweise von mindestens 20 µm, und/oder von höchstens 500 µm, vorzugsweise von höchstens 200 µm, auf. Eine derartige Schichtdicke stellt einerseits eine gute Handhabung sicher, trägt andererseits aber nicht zu stark auf.

In weiter bevorzugter Ausgestaltung weist die mehrschichtige Folienanordnung zudem eine Klebeschicht auf. Die Klebeschicht ist unterhalb, insbesondere unmittelbar unterhalb der adhäsionssteuernden Funktionsschicht angeordnet. Die mehrschichtige Folienanordnung ist somit ohne weitere Hilfsmittel als Sicherheitsetikett einsetzbar. Bei der Klebeschicht handelt es sich in bevorzugter Ausgestaltung um eine Klebeschicht basierend auf einer Haftklebemasse. Alternativ kann die Klebeschicht auch als Siegelschicht, insbesondere als Heißsiegelschicht oder als Kaltsiegelschicht, ausgebildet sein. Eine Siegelschicht bedarf üblicherweise einer Aktivierung. Die Aktivierung kann beispielsweise durch Wärmezufuhr (Heißsiegelschicht) oder durch UV-Bestrahlung (Kaltsiegelschicht) oder ähnliche Energiezufuhr erfolgen.

Als Alternative zu einer Ausgestaltung der mehrschichtigen Folienanordnung mit einer zusätzlichen Klebeschicht kann die Folienanordnung auch durch einen Kaltsiegelvorgang mit der adhäsionssteuernden Funktionsschicht selbst auf einem gewünschten Untergrund festgelegt werden. Hierzu ist es besonders vorteilhaft, wenn die adhäsionssteuernde Funktionsschicht vernetzbar, aber vor Aufbringung auf den gewünschten Untergrund noch nicht vollständig vernetzt ist. Vorzugsweise ist die adhäsionssteuernde Funktionsschicht jedoch vorvernetzt.

Die zuvor beschriebene mehrschichtige Folienanordnung wird bevorzugt als Sicherheitsetikett, beispielsweise in Form eines Sicherheitsklebebandes oder in Form eines Etiketten-Stanzlings verwendet.

In weiter bevorzugter Ausgestaltung weist die Markierschicht eine insbesondere individualisierte Information auf. Diese Information ist beispielsweise als computergeneriertes Hologramm ausgebildet. In weiter bevorzugter Ausgestaltung enthält nicht nur die Markierschicht sondern auch der Träger die individualisierte Information.

Ein nebengeordneter Aspekt der Erfindung betrifft Verfahren zur Verbindung einer mehrschichtigen Folienanordnung mit einem Klebeuntergrund. Es hat sich gezeigt, dass die adhäsionssteuernde Funktionsschicht einer mehrschichtigen Folienanordnung als Siegelkleber, insbesondere Kaltsiegelkleber zum Verbinden der Folienanordnung mit einem nahezu beliebigen Klebeuntergrund dienen kann. Hierzu wird die Folienanordnung vor einer vollständigen Vernetzung der adhäsionssteuernden Funktionsschicht mit selbiger auf den Klebeuntergrund aufgebracht. Anschließend wird die Vernetzung, beispielsweise thermisch oder wie insbesondere bei der Kaltsiegelung durch UV-Bestrahlung, durchgeführt. Während der Vernetzung findet eine dauerhafte Verbindung der adhäsionssteuernden Funktionsschicht mit dem Klebeuntergrund statt. Besonders bevorzugt wird als adhäsionssteuernde Funktionsschicht eine Lackschicht verwendet, wie dies bereits zuvor beschrieben wurde.

In bevorzugter Ausgestaltung des Verfahrens wird die adhäsionssteuernde Funktionsschicht als Lackschicht ausgebildet, wie dies auch schon zuvor bzgl. des mehrschichtigen Folienaufbaus beschrieben wurde. Die Lackschicht wird vor dem Entfernen von der metallisierten Folie ausgehärtet, um eine möglichst starke Verbindung zur Metallschicht zu schaffen. Die Aushärtung erfolgt vorzugsweise durch thermische Vernetzung und/oder UV-Vernetzung.

Weiter bevorzugt wird die adhäsionssteuernde Funktionsschicht vor dem Entfernen von der Folie mittelbar oder unmittelbar mit einem Hilfsträger verbunden. Dies ist insbesondere dann vorteilhaft, wenn die adhäsionssteuernde Funktionsschicht als dünne Schicht mit nur einigen nm Schichtdicke aufgetragen wird und insofern nicht selbst greifbar ist. Die Verbindung mit dem Hilfsträger, beispielsweise einer weiteren Folie, kann ohne weitere Zwischenschicht, also mittels einer Kaltsiegelung erfolgen. Es kann aber auch eine zusätzliche Klebeschicht zwischen der adhäsionssteuernden Funktionsschicht und dem Hilfsträger vorgesehen werden.

Weitere Einzelheiten, Merkmale und Aspekte der vorliegenden Erfindung werden im Folgenden anhand eines Ausführungsbeispiels näher erläutert. In der Zeichnung zeigt
- Fig. 1: eine schematische Darstellung einer erfindungsgemäßen mehrschichtigen Folienanordnung vor einem Manipulationsversuch (makroskopische Betrachtung),
- Fig. 2: die mehrschichtige Folienanordnung aus Fig. 1 nach einem Manipulationsversuch.

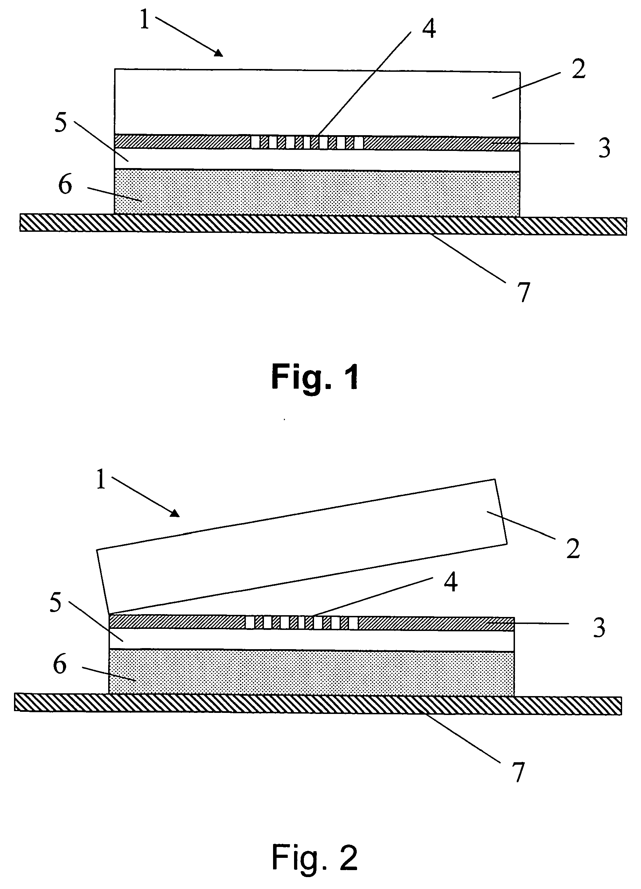

Fig. 1 zeigt eine mehrschichtige Folienanordnung 1 in schematischer Darstellung. Hierbei sind nur die makroskopischen Verhältnisse gezeigt, eine mikroskopische Betrachtung, insbesondere der einzelnen Schichten, ist nicht dargestellt.

Die Folienanordnung 1 weist einen Träger 2 in Form einer Polyesterfolie mit einer makroskopischen Schichtdicke von etwa 100 µm auf. Unmittelbar unterhalb des Trägers 2, also ohne zusätzliche Zwischenschichten, ist eine dünne Markierschicht 3 angeordnet, die vorliegend eine Schichtdicke von etwa 5 nm aufweist. Die Markierschicht 3 ist vorliegend als Metallschicht, nämlich als Aluminiumschicht ausgebildet und wurde hier und vorzugsweise mittels Vakuumbedampfung gebildet. Die Markierschicht 3 ist dabei mikroskopisch betrachtet so ausgebildet, dass sie auf dem Träger 2 keine geschlossene Schicht ausbildet. Vielmehr ist die Markierschicht 3 inselförmig ausgebildet, besteht also aus einer Vielzahl zueinander beabstandeter Inseln. Diese Inseln bedecken den Träger 2 zu etwa 95%. Ein inselförmiger Schichtaufbau lässt sich insbesondere bei einer dünnen Metallschicht relativ einfach verwirklichen. Die Markierschicht 3 dient zumindest teilweise als funktionelle Speicherschicht, in die vorliegend ein computergeneriertes Hologramm 4 als individuelle Kennzeichnung eingeschrieben ist.

Unterhalb der Markierschicht 3 ist eine adhäsionssteuernde Funktionsschicht 5 angeordnet. Die adhäsionssteuernde Funktionsschicht 5 ist vorliegend als UV-härtbare Lackschicht ausgebildet. Die adhäsionssteuernde Funktionsschicht 5 wurde vorliegend in flüssiger Form auf die Markierschicht 3 aufgetragen und anschließend ausgehärtet. Dem Fachmann sind verschiedene Beschichtungs- und Bedruckungsverfahren aus dem Stand der Technik bekannt (DE 10 2006 002 595 A1), wie eine geeignete Lackformulierung in geeigneter Weise voll- oder teilflächig auf die Markierschicht 3 aufgebracht werden kann. Beim Auftragen konnte das Material der adhäsionssteuernden Funktionsschicht 5, hier also der entsprechende Lack, in die mikroskopischen Zwischenräume der Markierschicht 3 eindringen und verbleibt dort auch nach der Aushärtung bzw. Vernetzung. Die verwendete UV-Lackschicht kann beispielsweise aus einer Kombination von im Handel erhältlichen acrylierten Oligomeren, Vernetzern, Reaktivverdünnern (siehe hierzu beispielsweise ebenfalls DE 10 2006 002 595 A1) und Zusatzstoffen, die einerseits bei der Härtung in den Lack eingebaut werden, andererseits eine ausgeprägte Affinität zu zumindest einer Art eines Bestandteils der Markierschicht aufweist. Handelt es sich bei der Markierschicht um eine Metallschicht, dann bieten sich als Zusatzstoffe vor allem säuremodifizierte Acrylate an.

Überraschenderweise senkt die adhäsionssteuernde Funktionsschicht 5 vorliegend die Adhäsion zwischen der Markierschicht 3 und dem Träger 2, so dass in Folge dessen die Adhäsion zwischen der Markierschicht 3 und dem Träger 2 die schwächste Stelle in dem Folienaufbau bildet.

Unterhalb der adhäsionssteuernden Funktionsschicht 5 ist noch eine Klebeschicht 6 basierend auf einer Haftklebemasse angeordnet. Mittels der Klebeschicht 6 ist die mehrschichtige Folienanordnung 1 auf einem zu kennzeichnenden Gegenstand 7 aufgeklebt.

Fig. 2 zeigt die Folienanordnung gemäß Fig. 1 nach einem Ablöseversuch. Der Manipulationsversuch bestand in einem Versuch, die Folienanordnung 1 von dem Gegenstand 7 zu entfernen, um sie anschließend weiter zu verwenden. Durch die adhäsionssteuernde Funktionsschicht 5 ist die Folienanordnung 1 so aufgebaut, dass die geringste Adhäsionskraft zwischen dem Träger 2 und der Markierschicht 3 wirkt. Der Manipulationsversuch hat demnach einen Bruch zwischen Träger 2 und der Markierschicht 3 bewirkt. Es wurde also lediglich der Träger 3 von den anderen Schichten des Folienaufbaus entfernt. Diese Schichten, insbesondere die Markierschicht 3, sind auf dem Gegenstand 7 verblieben. Eine Weiterverwendung des Trägers 2 hingegen ist für eine Kennzeichnung eines weiteren Gegenstands nicht geeignet, da die entscheidende Markierschicht 3 nicht mit entfernt werden konnte. Eine Entfernung der Markierschicht 3 alleine ist ebenfalls nicht zerstörungsfrei möglich, da aufgrund der dünnen Ausgestaltung sowohl der adhäsionssteuernden Funktionsschicht 5 als auch der Markierschicht 3 eine Zerstörung dieser Schichten bei einem Ablöseversuch unvermeidbar ist.

Die mehrschichtige Folienanordnung 1 stellt somit eine erhöhte Manipulationsresistenz dar, da sie einerseits eine individuelle Kennung trägt, die gegebenenfalls nur schwer fälschbar ist, und andererseits zudem nach einer einmaligen Verwendung nicht zerstörungsfrei entfernt werden kann.

## Patentansprüche

1. Mehrschichtige Folienanordnung zumindest aufweisend einen als Polyesterfolie ausgebildeten Träger (2) mit einer Schichtdicke zwischen 10 µm und 500 µm, eine als Metallschicht ausgebildete Markierschicht (3) und eine als vernetzte oder vorvernetzte Lackschicht ausgebildete adhäsionssteuernde Funktionsschicht (5) mit einer Schichtdicke zwischen 1 µm und 100 µm,
**dadurch gekennzeichnet,**
**dass** die adhäsionssteuernde Funktionsschicht (5) unterhalb der Markierschicht (3) angeordnet ist, wobei die Markierschicht (3) eine Schichtdicke von 2 nm bis 20 nm aufweist und mikroskopisch gesehen, das heißt bei Betrachtung der Feinstruktur in der Größenordnung einiger nm, als nicht vollflächig geschlossene Schicht ausgebildet ist, und zwar als Markierschicht nach Art des Volmer-Weber-Wachstums, die mikroskopisch also weder zu der darüber liegenden Schicht noch zu der darunter liegenden Schicht eine geschlossene Fläche bildet, und zwischen Inseln der Markierschicht (3) Zwischenräume sind, so dass das Material der adhäsionssteuernden Funktionsschicht (5), hier also der entsprechende Lack, in die mikroskopischen Zwischenräume der Markierschicht (3) eindringen und verbleiben kann.

2. Mehrschichtige Folienanordnung nach Anspruch 1, **dadurch gekennzeichnet,**
**dass** die Markierschicht (3) als laserbeschriftbare Schicht ausgebildet ist.

3. Mehrschichtige Folienanordnung nach Anspruch 1 oder 2, **dadurch gekennzeichnet,**
**dass** die adhäsionssteuernde Funktionsschicht (5) als die Adhäsion zwischen dem Träger (2) und der Markierschicht (3) absenkende Funktionsschicht (5) ausgebildet ist.

4. Mehrschichtige Folienanordnung nach einem der vorhergehenden Ansprüche,
**dadurch gekennzeichnet,**
**dass** die adhäsionssteuernde Funktionsschicht (5) unmittelbar unterhalb der Markierschicht (3) angeordnet ist.

5. Mehrschichtige Folienanordnung nach einem der vorhergehenden Ansprüche,
**dadurch gekennzeichnet,**
**dass** die Markierschicht (3) die darüber angeordnete Schicht zu mehr als 80% bedeckt.

6. Mehrschichtige Folienanordnung nach einem der vorhergehenden Ansprüche
**dadurch gekennzeichnet,**
**dass** die Markierschicht (3) unmittelbar unterhalb des Trägers (2) angeordnet ist.

7. Mehrschichtige Folienanordnung nach einem der vorhergehenden Ansprüche,
**dadurch gekennzeichnet,**
**dass** die Markierschicht (3) als Aluminiumschicht ausgebildet ist.

8. Mehrschichtige Folienanordnung nach einem der vorhergehenden Ansprüche,
**dadurch gekennzeichnet,**
**dass** die adhäsionssteuernde Funktionsschicht (5) UV- oder thermisch vernetzt ist.

9. Mehrschichtige Folienanordnung nach einem der vorhergehenden Ansprüche,
**dadurch gekennzeichnet,**
**dass** der Träger (2) eine Schichtdicke von mindestens 20 µm aufweist.

10. Mehrschichtige Folienanordnung nach einem der vorhergehenden Ansprüche,
**dadurch gekennzeichnet,**
**dass** unterhalb der adhäsionssteuernden Funktionsschicht (5) eine Klebeschicht (6) angeordnet ist.

11. Mehrschichtige Folienanordnung nach einem der vorhergehenden Ansprüche,
**dadurch gekennzeichnet,**
**dass** die Klebeschicht (6) eine Haftklebemasse oder eine Siegelmasse aufweist.

12. Verwendung einer mehrschichtigen Folienanordnung gemäß einem der Ansprüche 1 bis 11 als Sicherheitsetikett.

13. Verwendung nach Anspruch 12, **dadurch gekennzeichnet,**
**dass** das Sicherheitsetikett eine durch einen Prägeprozess und/oder ein Laserverfahren eingebrachte Struktur enthält.

14. Verwendung nach Anspruch 12, **dadurch gekennzeichnet,**
**dass** die Markierschicht (3) individualisierte Information enthält.

15. Verwendung nach Anspruch 12 oder 13, **dadurch gekennzeichnet,**
**dass** die Markierschicht (3) ein computergeneriertes Hologramm enthält.

16. Verwendung nach Anspruch 14, **dadurch gekennzeichnet,**
**dass** neben der Markierschicht (3) auch der Träger (2) die individualisierte Information enthält.

17. Verfahren zur Verbindung einer mehrschichtigen Folienanordnung gemäß einem der Ansprüche 1 bis 11 mit einem Klebeuntergrund,
**dadurch gekennzeichnet,**
**dass** die Folienanordnung mit ihrer adhäsionssteuernden Funktionsschicht (5) auf den Klebeuntergrund aufgebracht wird.

18. Verfahren nach Anspruch 17, **dadurch gekennzeichnet,**
**dass** die adhäsionssteuernde Funktionsschicht (5) erst nach dem Aufbringen auf den Klebeuntergrund vollständig vernetzt wird.

19. Verfahren nach Anspruch 17, **dadurch gekennzeichnet,**
**dass** die adhäsionssteuernde Funktionsschicht (5) vor dem Entfernen ausgehärtet wird.

20. Verfahren nach Anspruch 19, **dadurch gekennzeichnet,**
**dass** die adhäsionssteuernde Funktionsschicht (5) vor dem Entfernen durch thermische Vernetzung und/oder UV-Vernetzung ausgehärtet wird.

21. Verfahren nach Anspruch 17, **dadurch gekennzeichnet,**
**dass** die adhäsionssteuernde Funktionsschicht (5) vor dem Entfernen von der Folie mittelbar oder unmittelbar mit einem Hilfsträger verbunden wird.

## Claims

1. Multilayer film arrangement at least comprising a carrier (2) which takes the form of polyester film with layer thickness from 10 µm to 500 µm, a marking layer (3) which takes the form of metal layer, and an adhesion-controlling functional layer (5) which takes the form of crosslinked or precrosslinked lacquer layer with layer thickness from 1 µm to 100 µm,
**characterized in that**
the arrangement has the adhesion-controlling functional layer (5) underneath the marking layer (3), and the marking layer (3) here has a layer thickness of from 2 nm to 20 nm, and microscopically, i.e. when the fine structure of the order of magnitude of a few nm is observed, takes the form of layer that is not coherent over the entire area, specifically being a marking layer of Volmer-Weber-growth type, which microscopically therefore does not form a coherent area either with respect to the layer situated thereabove or with respect to the layer situated thereunder, and between islands of the marking layer (3) there are intervening spaces, and therefore the material of the adhesion-controlling functional layer (5), i.e. in this case the corresponding lacquer, can penetrate into the microscopic intervening spaces of marking layer (3) and can remain there.

2. Multilayer film arrangement according to Claim 1,
**characterized in that** the marking layer (3) takes the form of laser-inscribable layer.

3. Multilayer film arrangement according to Claim 1 or 2, **characterized in that**
the adhesion-controlling functional layer (5) takes the form of functional layer (5) lowering the adhesion between the carrier (2) and the marking layer (3).

4. Multilayer film arrangement according to any of the preceding claims,
**characterized in that**
the arrangement has the adhesion-controlling functional layer (5) immediately underneath the marking layer (3).

5. Multilayer film arrangement according to any of the preceding claims,
**characterized in that**
the marking layer (3) covers the layer arranged thereabove to an extent of more than 80%.

6. Multilayer film arrangement according to any of the preceding claims,
**characterized in that**
the arrangement has the marking layer (3) immediately underneath the carrier (2).

7. Multilayer film arrangement according to any of the preceding claims,
**characterized in that**
the marking layer (3) takes the form of aluminium layer.

8. Multilayer film arrangement according to any of the preceding claims,
**characterized in that**
the adhesion-controlling functional layer (5) has been UV-crosslinked or thermally crosslinked.

9. Multilayer film arrangement according to any of the preceding claims,
**characterized in that**
the carrier (2) has a layer thickness of at least 20 µm.

10. Multilayer film arrangement according to any of the preceding claims,
**characterized in that**
the arrangement has an adhesive layer (6) underneath the adhesion-controlling functional layer (5).

11. Multilayer film arrangement according to any of the preceding claims,
**characterized in that**
the adhesive layer (6) comprises a pressure-sensitive adhesive or a sealable composition.

12. Use of a multilayer film arrangement according to any of Claims 1 to 11 as security label.

13. Use according to Claim 12, **characterized in that** the security label comprises a structure introduced by a pressure process and/or by a laser method.

14. Use according to Claim 12, **characterized in that** the marking layer (3) comprises individualized information.

15. Use according to Claim 12 or 13, **characterized in that**
the marking layer (3) comprises a computer-generated hologram.

16. Use according to Claim 14, **characterized in that** not only the marking layer (3) but also the carrier (2) comprises the individualized information.

17. Method for the bonding of a multilayer film arrangement according to any of Claims 1 to 11 to an adhesive substrate,
**characterized in that**
the adhesion-controlling functional layer (5) of the film arrangement is applied to the adhesive substrate.

18. Method according to Claim 17, **characterized in that**
completion of crosslinking of the adhesion-controlling functional layer (5) is delayed until after application to the adhesive substrate.

19. Method according to Claim 17, **characterized in that**
the adhesion-controlling functional layer (5) is hardened before removal.

20. Method according to Claim 19, **characterized in that**
thermal crosslinking and/or UV crosslinking is used to harden the adhesion-controlling functional layer (5) before removal.

21. Method according to Claim 17, **characterized in that**
the adhesion-controlling functional layer (5) is bonded directly or indirectly to an auxiliary carrier before removal from the film.

## Revendications

1. Arrangement de feuilles multicouche, comprenant au moins un support (2), conçu comme une feuille de polyester, ayant une épaisseur de couche comprise entre 10 µm et 500 µm, une couche de marquage (3) conçue comme une couche métallique, et une couche fonctionnelle (5) régulatrice d'adhérence, conçue comme une couche de vernis réticulée ou pré-réticulée, ayant une épaisseur de couche comprise entre 1 µm et 100 µm, **caractérisé en ce que** la couche fonctionnelle régulatrice d'adhérence (5) est disposée en-dessous de la couche de marquage (3), la couche de marquage (3) présentant une épaisseur de couche de 2 nm à 20 nm, et, d'un point de vue microscopique, c'est-à-dire quand on observe la structure fine de l'ordre de grandeur de quelques nm, étant conçue comme une couche qui n'est pas fermée en pleine surface, et plus précisément sous forme d'une couche de marquage à la façon de la croissance de Volmer-Weber, qui à l'échelle microscopique, ne forme de surface fermée ni pour la couche située par-dessus, ni pour la couche située par-dessous, et des espaces intermédiaires existant entre les îlots de la couche de marquage (3), de façon que le matériau de la couche fonctionnelle régulatrice d'adhérence (5), c'est-à-dire ici le vernis correspondant, puisse pénétrer et rester dans les espaces intermédiaires microscopiques de la couche de marquage (3).

2. Arrangement de feuilles multicouche selon la revendication 1, **caractérisé en ce que** la couche de marquage (3) est conçue comme une couche inscriptible par laser.

3. Arrangement de feuilles multicouche selon l'une des revendications 1 ou 2, **caractérisé en ce que** la couche fonctionnelle régulatrice d'adhérence (5) est conçue comme une couche fonctionnelle (5) qui diminue l'adhérence entre le support (2) et la couche de marquage (3).

4. Arrangement de feuilles multicouche selon l'une des revendications précédentes, **caractérisé en ce que** la couche fonctionnelle régulatrice d'adhérence (5) est disposée immédiatement en-dessous de la couche de marquage (3).

5. Arrangement de feuilles multicouche selon l'une des revendications précédentes, **caractérisé en ce que** la couche de marquage (3) recouvre à raison de plus de 80 % la couche située par-dessus.

6. Arrangement de feuilles multicouche selon l'une des revendications précédentes, **caractérisé en ce que** la couche de marquage (3) est disposée immédiatement en-dessous du support (2).

7. Arrangement de feuilles multicouche selon l'une des revendications précédentes, **caractérisé en ce que** la couche de marquage (3) est conçue comme une couche d'aluminium.

8. Arrangement de feuilles multicouche selon l'une des revendications précédentes, **caractérisé en ce que** la couche fonctionnelle régulatrice d'adhérence (5) est réticulée aux UV ou par voie thermique.

9. Arrangement de feuilles multicouche selon l'une des revendications précédentes, **caractérisé en ce que** le support (2) présente une épaisseur de couche d'au moins 20 µm.

10. Arrangement de feuilles multicouche selon l'une des revendications précédentes, **caractérisé en ce qu'**une couche adhésive (6) est disposée en-dessous de la couche fonctionnelle régulatrice d'adhérence (5).

11. Arrangement de feuilles multicouche selon l'une des revendications précédentes, **caractérisé en ce que** la couche adhésive (6) comprend une masse d'adhésif de contact ou une masse d'étanchéité.

12. Utilisation d'un arrangement de feuilles multicouche selon l'une des revendications 1 à 11 en tant qu'étiquette de sécurité.

13. Utilisation selon la revendication 12, **caractérisée en ce que** l'étiquette de sécurité contient une structure introduite par un procédé d'estampage et/ou par un procédé laser.

14. Utilisation selon la revendication 12, **caractérisée en ce que** la couche de marquage (3) contient des informations individualisées.

15. Utilisation selon la revendication 12 ou 13, **caractérisée en ce que** la couche de marquage (3) contient un hologramme généré par ordinateur.

16. Utilisation selon la revendication 14, **caractérisée en ce qu'**outre la couche de marquage (3), le support (2) contient lui aussi les informations individualisées.

17. Procédé pour assembler un arrangement de feuilles multicouche selon l'une des revendications 1 à 11 à un substrat adhésif, **caractérisé en ce que** l'arrangement de feuilles, avec sa couche fonctionnelle régulatrice d'adhérence (5), est appliqué sur le substrat adhésif.

18. Procédé selon la revendication 17, **caractérisé en ce que** la couche fonctionnelle régulatrice d'adhérence (5) n'est entièrement réticulée qu'après application sur le substrat adhésif.

19. Procédé selon la revendication 17, **caractérisé en ce que** la couche fonctionnelle régulatrice d'adhérence (5) est entièrement durcie avant son enlèvement.

20. Procédé selon la revendication 19, **caractérisé en ce que** la couche fonctionnelle régulatrice d'adhérence (5) est entièrement durcie avant son enlèvement, par réticulation thermique et/ou réticulation aux UV.

21. Procédé selon la revendication 17, **caractérisé en ce que** la couche fonctionnelle régulatrice d'adhérence (5) est, avant d'être enlevée de la feuille, directement ou indirectement assemblée à un support auxiliaire.
